# EUROPEAN PATENT APPLICATION

(11) **EP 1 862 886 A2**
(43) Date of publication of application: **05.12.2007**
(21) Application number: 07252198.2
(22) Date of filing: 30.05.2007
(51) Int. Cl.: G06F 3/02

(54) **Order input device for electronic trading system**

(30) Priority: 30.05.2006 US 809715 P
(71) Applicant: EBS Group Limited, London EC2M 7UR (GB)
(72) Inventor: Danko, Peter, Fair Lawn,New Jersey 07410 (US); Schoenfeld, Adam, Mendham, New Jersey 07945 (US); Perez, Robert David, Montville, New Jersey 07045 (US); Grossman, Michael Oliver, Somerset, New Jersey 08873 (US)
(74) Representative: Lloyd, Patrick Alexander Desmond

(57) **Abstract**

A trading appliancefor an electronic trading system comprises a keypad into which is integrated a computer which communicates between the keypad and the trading system. The keypad has keys for entry of trade related data into the trading system. A retractable keyboard has keys for entry of non-trade related data into the trading system and may be retracted to a position within the keypad housing. A mouse is provided on the keypad. A display monitor may be connected the keypad for display of trading data received from the keypad and the trading system. A portion of the keypad, and an associated circuit boards may be detached and replaced by a keypad portion appropriate for trading a different instrument or on a different market.

## Description

### Field of the Invention

This invention relates to electronic trading systems and, in particular to order input devices for electronic trading systems.

### Background to the Invention

Electronic trading systems have become commonplace over the past few years. Typically, traders who trade financial instruments in one or more areas will have access to a number of different electronic trading systems. These may include different systems for trading different products, for example dedicated to a particular exchange. They may also include systems provided by rival operators which give the a choice of where to trade a particular product. Each of these trading systems may require a dedicated trader workstation including a computer, a display, and input devices such as a keyboard, a mouse and an order input keypad.

In the case of a trader operating in the foreign exchange markets, it is not uncommon to have up to six different systems installed. Each of these systems requires a dedicated desktop PC and keyboard. These take up valuable space on and around the trader's desk resulting in the trader's working environment becoming cramped. Traders will stack keyboards to reduce the space they take up which is neither safe nor desirable. The problem is at its most severe with systems that operate on dedicated networks. Systems that are internet based do not necessarily need a dedicated work station although, in practice, the trader will want a monitor dedicated to each system on which they are likely to trade so that they can follow the markets.

### Summary of the Invention

We have appreciated that there is a need to reduce the amount of space taken up by hardware that is required by a trader to enable them to trade.

A first aspect of the invention provides a trading appliance for communication between a trader and an electronic trading system, the trading appliance comprising: an integrated computer and keypad, the computer running trading system software and being arranged within the trading appliance body and receiving trade related data inputs from the keypad for transmission to the trading system and receiving data from the trading system for display at a display device connectable to the trading appliance.

The computer is preferably a single board computer and is mounted within the trading appliance body and connected to a keypad circuit board. EMI shielding is arranged between the keypad circuit board and the single board computer. A fingerprint reader may be provided for simple login and logout of users.

A second aspect of the invention provides a keypad for an electronic trading system, the keypad comprising: a plurality of keys for entry of deal related data to the trading system; and a retractable keyboard having a plurality of keys for entry of non-deal related data into the trading system. The retractable keyboard is movable between an extended position in which the keyboard keys are accessible by a user, and a retracted position in which the keyboard keys are not accessible to the user. In the retracted position, the keyboard is preferably housed substantially wholly within the keypad housing. The keypad may comprise a computer housed within the keypad, the computer communicating with the keyboard and the keypad, for entry of data into the trading system, the computer further having a communications port for outputting data to a display device. A mouse may be provided on the keypad, the mouse being connected to the computer. The mouse is integrated into the keyboard. In one preferred embodiment, a keypad circuit board is housed within the keypad, and an electromagnetic interference (EMI) shield arranged between the computer and the keypad printed circuit board.

A third aspect of the invention provides a keypad for communication of trade related data between a trader and an electronic trading system, the keypad comprising: a keypad body, a first set of keys and a removable second set of keys, the first set of keys and the second set of keys being connected respectively to a first circuit board and a second circuit board; wherein the keys of the second set of keys are specific to a first trading environment. The keypad further comprises at least one further set of keys and circuit board, the keys of the further set of keys being specific to a further trading environment and the further set of keys and circuit board being interchangeable with the second set of keys and second circuit board.

This aspect of the invention also provides a keypad for communication of trade related data between a trader and an electronic trading system, the keypad comprising a keypad body and a removable set of keys connected to a circuit board, the removable set of keys being detachably mounted on the keypad body and suitable for trading a first product and replaceable on the keyboard body by a further set of keys connected to a circuit board for trading a second product.

Embodiments of the various aspects of the invention have the advantage that the desktop PC computer and keypad, and additionally the keyboard and mouse can all be integrated into a single device of essentially the same footprint on the trader's workspace as existing keypads. This has the advantage of greatly reducing the space taken up by the hardware required to enable the trader to trade on the trading system. The third aspect of the invention has the advantage that a single keypad can be used for several trading operations, either trading different instruments of different applications or markets. The detachable part of the keypad is fitted with a set of keys that is appropriate to the market or instrument being traded. This obviates the need for a different keypad for each market or instrument the trader trades on.

### Brief Description of Drawings

An embodiment of the invention will now be described, by way of example only, and with reference to the accompanying drawings, in which:
Figure 1 is a schematic view of a typical prior art workstation;
Figure 2 is a plan of an integrated trading appliance embodying a first aspect of the invention;
Figure 3 is a schematic side view of the integrated trading appliance;
Figure 4 is a plan of an integrated trading appliance embodying a second aspect of the invention and showing a keyboard in its extended position;
Figures 5 and 6 are plans of integrated trading appliances embodying a third aspect of the invention and showing at least a part of the keypad may be modular; and
Figure 7 is a schematic view of a trading floor side of trading system embodying the order input device or trading appliance of any of figures 2 to 6.

### Description of Preferred Embodiment

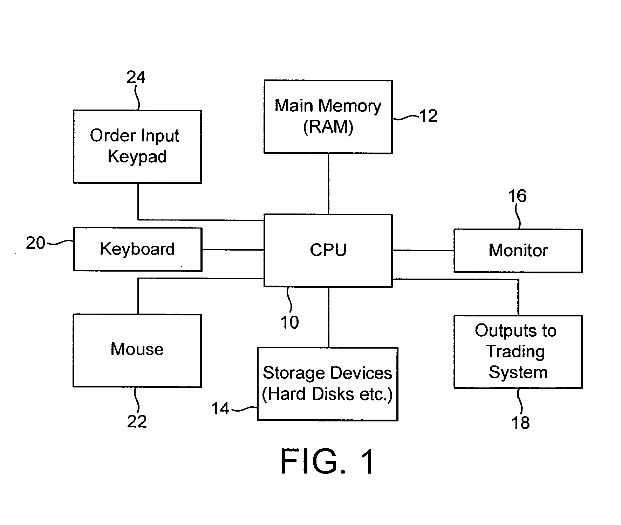

Figure 1 shows, schematically, a typical trader workstation. The workstation comprises a computer, represented by the CPU 10, RAM 12 and Storage Devices 14. To the computer, which may be a conventional desktop PC, are connected input and output devices. The output devices include a monitor 16 and outputs 18 to the trading system. These may include communications outputs that enable the trader workstation to send data to, and receive data from, the trading system. The input devices include a keyboard 20 which may be a conventional alphanumeric keyboard and a pointer device such as a mouse 22. In addition, a dedicated order input keypad is provided. These keypads are well known in the field of trading systems and offer traders a visually simple set of keys to enable them to perform trading operations. An example of a known keypad is the KP1** Keypad provided by C.A. Designs (Leicester) Ltd. of Leicestershire, United Kingdom. This keypad provides a number of short cut keys enabling the trader to submit bid or offer, buy or sell orders with a single keystroke as well as providing the ability to enter numerals, navigate around a display and switch between different trading displays. Separate dedicated keypads with large keys are used as traders operate in a very high-speed, highpressure environment and the conventional keyboard is too complex with too many different keys to be suitable.

The keyboard is still required by the trader to perform functions such as logging into the system which requires the availability of alphabet character keys.

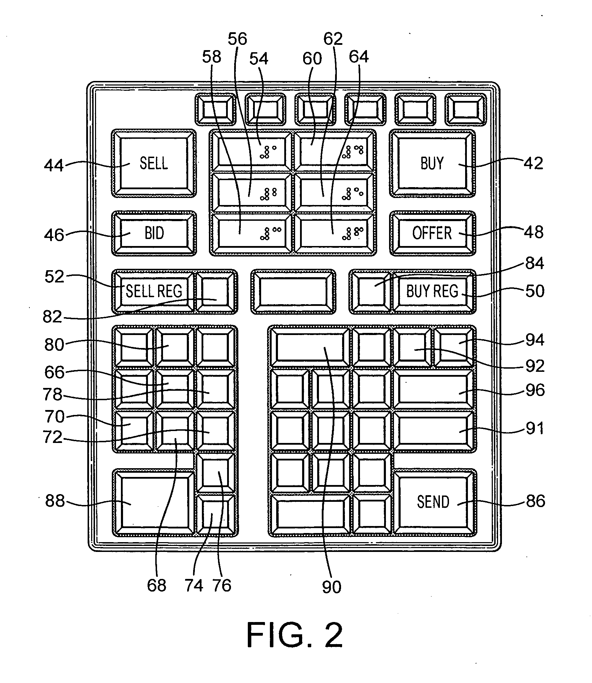

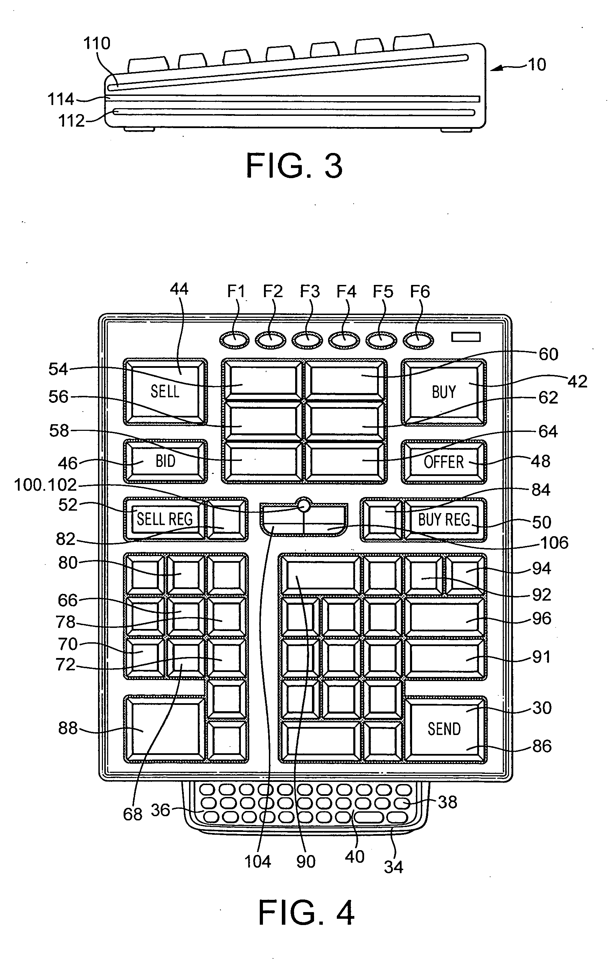

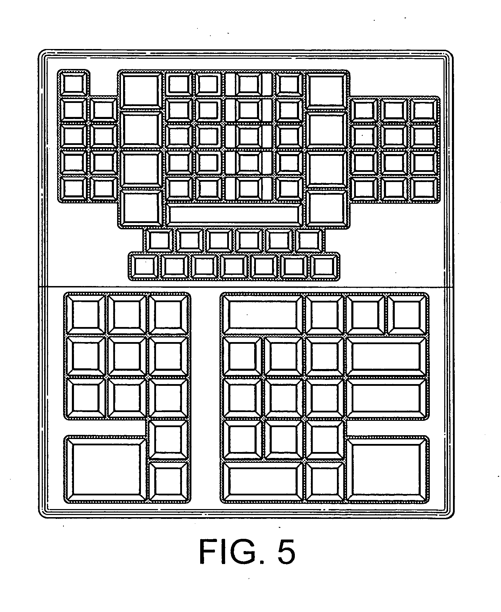

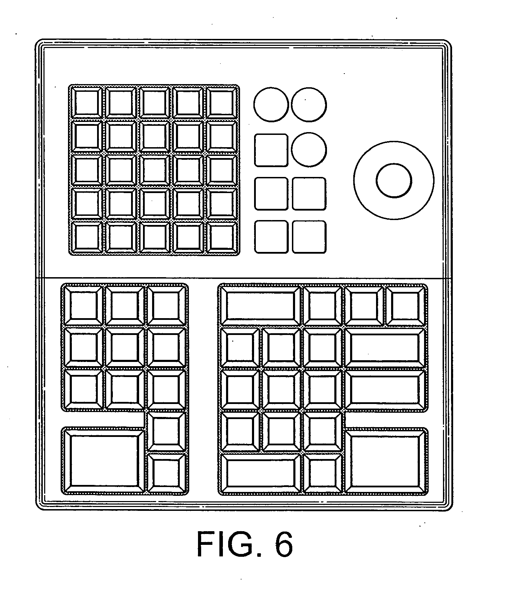

We have appreciated that a number of significant improvements to the keypad may be made, both to reduce the amount of space occupied by the keypad and the desktop PC, and associated peripherals, and also to increase the flexibility of the keypad to make it suitable for a number of different trading activities. Figures 2 and 3 illustrate an embodiment of a first aspect of the invention in which the separate desktop PC is integrated into the keypad. Figure 4 shows an embodiment of a second aspect of the invention in which they keyboard and mouse are also integrated into the keypad. Figures 5 and 6 illustrate an embodiment of a third aspect of the invention in which at least some of the keys of the keypad are modular and may be replaced to reconfigure the keypad to make it suitable for a different trading activity.

We have further appreciated that the components of the workstation computer that are essential to operation of the keypad, such a the CPU, RAM, storage devices etc. may be mounted within the keypad so reducing the size of the trading appliance significantly.

Figure 3 shows how the components of the PC workstation of the prior art are assembled within the keypad to form a trading appliance. The PC components such as the CPU, RAM and storage devices are mounted on a single circuit board 110 and communicate with the keypad, the USB port, the keyboard and the mouse. The space required by the computer board can be reduced by discarding elements of the PC that are not required for dedicated operation as a trading system terminal. The features of a standard desktop PC that are required include running an operating system, such as Windows ® XP Professional OS, running the front end of a trading application, user login and logout, temporary keystroke logging, keyboard, mouse and printer interface, network interface, display and audio drivers. These features may be implemented using a single board computer (SBC) configuration, such as is provided by a VIA EPIA EN-Series Mini-ITX mainboard. Key stoke logging may be accommodated by a 512 MB solid state flash store and space may further be saved by not supporting a hard drive. In the embodiment of figure 2, USB 2.0 ports are provided for mouse, keyboard and printer connection, and a fourth USB port provides internal connection to the keypad circuit board. A first Ethernet port provides for connection to the server and a second Ethernet port may be provided for diagnostics. Further ports are provided to connect the monitor and external audio speakers. Thus the integrated computer is running trading system software.

The keypad includes a keypad printed circuit board 112 which is similar to that provided on existing keypads. However, to prevent interference between the keypad PCB and the Computer, an EMI shield, here a membrane 114, is arranged between the two as shown in figure 3.

The Keypad itself shown in figure 2 has similar keys to known keypads. Thus, the trader is provided with Buy 42, Sell 44, Bid 46 and Offer 48 keys and Buy Reg and Sell Reg keys 50, 52. The latter are used where the trader wishes to buy or sell a regular or standardised amount traded on the system and saves the trader from having to enter the volume of the proposed trade. In addition, six panel keys 54, 56, 58, 60, 62 and 64 enable the trader to choose which display panel is viewed on their monitor. Additional keys include numeral keys 0 - 9, navigation keys including up 66, down 68, left 70, right 72, tab 74, back tab 76, menu 78, list 80, page up 82 and page down 84. A send key 86 causes information entered via the keypad, such as the details of a bid, to be sent to the trading system and an Off All key 88 switches the keypad off. Additional keys include a dynamic summary key 90 enabling a trader to view his activity over the trading day, an enter key 91, an error log key 92, a clear all key 94 and an answer call key 96 which may be used to pick up price requests from third parties. It will be appreciated that the keys that are used most frequently, and which are most important, are the largest, reducing the likelihood of error in very fast moving markets. In addition, 6 function keys F1 - F6 are provided at the top of the keypad which may be customised by users to provide additional ease of use.

Thus, the embodiment of figures 2 and 3 enables the desktop PC unit to be eliminated and all the required functionality to be integrated within the keypad. This may be done without any significant increase in the footprint of the keypad on the trader's desk, although the keypad may be a little higher than a conventional keypad.

We have appreciated that the amount of use required of the keyboard is very small compared to the amount of space it occupies on the trader's workspace. The embodiment of figure 4 provides a keypad into which is integrated the desktop PC and additionally a mouse and an extendible, reduced size, keyboard which may be retracted when not in use, which will be for the majority of the trading day.

Figure 4 shows a plan of the keypad 30 with the keyboard 32 shown in the extended position. The keyboard may be retracted into the body of the keypad to remove it from view. Thus the keyboard is movable between an extended position in which the keyboard keys are accessible by a user, and a retracted position in which the keyboard keys are not accessible to the user. In the retracted position the keyboard is substantially housed within the keypad housing.

As the keyboard may only be used by the trader for start up functions such as logging into the system first thing in the morning, the trader may prefer to retract the keyboard once they begin trading so that it does not get in the way. The keys are very much smaller than used on a conventional computer keyboard and are similar in size to those used on a wireless email device such as a Blackberry (RTM) provided by Research in Motion Limited of Ontario Canada. We have appreciated that the actual usage of an alphanumeric keyboard by a trader is very small and so small key size will not inconvenience traders. The retractable keyboard may contain a full alpha numeric key set or preferably, and as shown in Figure 4, just contain alphabet keys A to Z with a small number of additional keys such as an enter key 34, a shift key 36 a back space key 38 and a space key 40. Each key may have an additional function assigned to it which may be accessed by pressing the shift key followed by the key.

In the centre of the keypad is a pointing device or mouse 100 having a pointer control, here a joystick 102 and left and right click buttons 104, 106. The mouse is of the type commonly used on laptop and other portable computers and any other suitable mouse designs such as touch sensitive pads or tracker balls may be used.

Thus, the embodiment of figure 4 shows how the conventional computer keyboard and mouse, which are usually separate peripheral devices, are both integrated into the keypad. It will be appreciated that the keypad of figures 2 or 4 could be modified to include just the mouse or just the retractable keyboard.

Similarly this second aspect of the invention is independent of the first aspect of the invention and the keyboard and/or mouse could be provided on the keypad as shown in figure 4 without the desktop PC being integrated into the keypad. This would still provide considerable space saving for the trader.

The keypad of figure 4 is provided with the same USB, ethernet and monitor/audio ports, except that two fewer external USB ports are required as the keyboard and mouse are integrated into the keypad. These ports may be used internally to connect the keyboard and mouse to the single board computer.

Figures 5 and 6 illustrate a third aspect of the invention. In this aspect, which may be embodied with either, both, or none of the first two aspects of the invention, the keypad provides a flexible layout that is semi-interchangeable based on the trading environment in which the trader is operating. Figures 5 and 6 are merely illustrative of the concept and do not represent key layouts for any particular instruments. However, it will be appreciated that the upper half of the keypad is removable whereas the lower half is fixed. The keys on the lower half are those that are common to all trading environments, whereas those of the upper half are particular to a given trading environment or instrument. For example, the keys required by a trader to trade FX Spot are very different from those required to trade derivatives products and the keys that are application or instrument specific may be located on the interchangeable part of the keypad. It will be noted that the embodiment of figure 6 includes a mouse on the upper part of the keypad.

As can be seen from figure 3, a keypad circuit board is arranged underneath the keypad. In the embodiments of figures 5 and 6, the detachable upper keypad has its own circuit board each of which can be connected to the single board computer when the detachable keypad is fitted. Thus, the upper keypad provides a set of keys having an associated keypad and the lower keypad provides a further set of keys having an associated keypad. The lower keypad is fixed to the keypad body whereas the upper keypad is detachable from the keypad body and may be replaced by one of a number of possible keypads each of which has a key set with an associated circuit board.

In an alternative embodiment, not shown, the entire keypad may be removed from the keypad body and replaced by a keypad suitable for a different trading environment.

In the description of figure 4 above, it was mentioned that one of the uses of a keypad by a trader is to login and logout of the system. In a further aspect of the invention, not illustrated, a fingerprint reader may be provided which can read the fingerprint of a trader to log them onto or off the system, or deny them access. This has the advantage of being very quick and may obviate the need for a retractable keyboard. However, the keyboard would still be required by TFAs (trading floor administrators) and others who have to input non-trade related data such as credit limits and permissions into the system.

In one preferred embodiment of the invention a single consolidated cable may be used which connects to monitor, network, speaker and power ports as well as providing connection to USB ports that may be required in the future. This cable can be attached to a single bulkhead connector on the trading appliance.

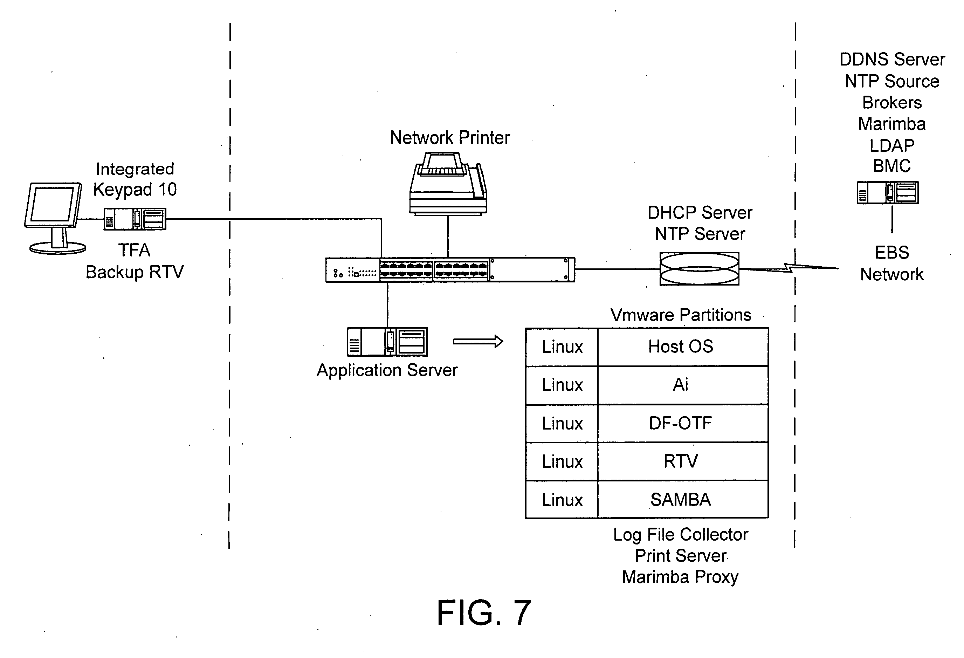

Figure 7 is a schematic view showing how the integrated keypad described with respect to figures 2 and 6 forms part of the trading system. The figure is split into three parts. To the left of the leftmost dashed line is the integrated keypad and attached monitor, representing the trader work station. In the centre is trading floor hardware which connects all the trader terminals that form the trading floor and includes network printers and application servers and a router for communicating with the trading system via a dedicated network shown to the right of the rightmost dashed line. Although shown used with a dedicated network, the integrated keypad may be used with any type of trading system, including one that uses a public network such as the internet.

Thus, the embodiments of the various aspects of the inventions described integrate the basic desktop PC computer and keypad, and may additionally integrate the mouse and keyboard into a single keypad of similar size to a conventional keypad. In a preferred embodiment the width and depth of the keypad are the same as prior art keypads but the height is a little higher to accommodate the computer circuit board. The footprint of the terminal on the trader's desk is essentially the same as that of a prior art keypad. This frees up room at the trader's workspace that was previously occupied by the keyboard, mouse and computer which improves the quality of the trader's workspace.

By providing a set of keys which is partly interchangeable, along with an associated circuit board, a single keypad may be used to trade on a number of different markets or to trade a number of different instruments.

## Claims

1. A trading appliance for communication between a trader and an electronic trading system, the appliance comprising:
an integrated computer and keypad, the computer running trading system software and being arranged within the keypad body and receiving trade related data inputs from the keypad for transmission to the trading system and receiving data from the trading system for display at a display device connectable to the trading appliance.

2. A trading appliance according to claim 1, comprising an retractable keyboard connected to the computer for input of non-trade related data to the trading system, the retractable keyboard being movable between an extended position in which keyboard keys are accessible by a user, and a retracted position in which keyboard keys are not accessible to the user.

3. A trading appliance according to claim 2, further comprising a mouse mounted on the keypad.

4. A trading appliance according to claim 1, 2 or 3 comprising a keypad printed circuit board housed within the keypad and connected to the computer, and an electromagnetic shielding layer between the computer and the keypad printed circuit board.

5. A trading appliance according to claim 1, 2, 3 or 4 wherein the computer is a single board computer.

6. A trading appliance according to any preceding claim, comprising a fingerprint reader for reading fingerprints of a users to log the user in or out of the trading system.

7. A trading appliance according to any preceding claim, wherein the keypad is mounted on a keypad body and at least part of the keypad is detachable from the body with an associated keypad circuit board, the body being configured to receive an alternative keypad and circuit board having a different arrangement of keys thereon.

8. A trading appliance for communication of trade related data between a trader and an electronic trading system, the keypad comprising:
an integrated computer and keypad, the keypad having a body, a plurality of keys and a circuit board connected to the keys, the computer being arranged within the keypad and connected to the circuit board and receiving trade related data inputs from the keys of the keypad for transmission to the trading system and receiving data from the trading system for display at a display device connectable to the keypad.

9. A keypad for an electronic trading system, the keypad comprising:
a plurality of keys for entry of deal related data to the trading system; and
a retractable keyboard having a plurality of keys for entry of non-deal related data into the trading system, the retractable keyboard being movable between an extended position in which the keyboard keys are accessible by a user, and a retracted position in which the keyboard keys are not accessible to the user.

10. A keypad according to claim 9, wherein the keypad comprises a housing and, in the retracted position, the keyboard is substantially housed within the keypad housing.

11. A keypad according to claim 9 or 10, wherein the keypad comprises a computer housed within the keypad, the computer communicating with the keyboard and the keypad for entry of data into the trading system, the computer further having a communications port for outputting data to a display device.

12. A keypad according to claim 11, wherein the keypad further comprises a mouse, the mouse being connected to the computer.

13. A keypad according to claim 11 or 12, comprising a keypad circuit board housed within the keypad, and an electromagnetic interference (EMI) shield arranged between the computer and the keypad printed circuit board.

14. A keypad according to claim 5, wherein the EMI shield is an EMI membrane.

15. A keypad according to claim 11, comprising a fingerprint reader coupled to the computer to read user fingerprints for logging the user on and off the system.

16. A keypad according to claim 11, wherein the keys of the keypad are connected to a circuit board connected to the computer.

17. A keypad according to claim 11, wherein the computer is a single board computer.

18. A keypad according to claim 16, wherein the keypad comprises a first set of keys connected to a first circuit board, the first set of keys being arranged on a housing fixed to the keypad body, and a second set of keys connected to a second circuit board, the second set of keys and second circuit board being arranged on a housing detachable from the keypad housing.

19. A keypad for communication of trade related data between a trader and an electronic trading system, the keypad comprising: a keypad body, a first set of keys and a removable second set of keys, the first set of keys and the second set of keys being connected respectively to a first circuit board and a second circuit board; wherein the keys of the second set of keys are specific to a first trading environment, the keypad further comprising a least one further set of keys and circuit board, the keys of the further set of keys being specific to a further trading environment and the further set of keys and circuit board being interchangeable with the second set of keys and second circuit board.

20. A keypad for communication of trade related data between a trader and an electronic trading system, the keypad comprising a keypad body and a removable set of keys connected to a circuit board, the removable set of keys being detachably mounted on the keypad body and suitable for trading a first product and replaceable on the keyboard body by a further set of keys connected to a circuit board for trading a second product.
